**Europäisches Patentamt**

**European Patent Office**

**Office européen des brevets**

(19)

(11) Veröffentlichungsnummer: **0 280 891 B1**

(12) **EUROPÄISCHE PATENTSCHRIFT**

(45) Veröffentlichungstag der Patentschrift: **29.04.92**

(51) Int. Cl.5: **G05D 23/19**, F03G 7/06

(21) Anmeldenummer: **88101447.6**

(22) Anmeldetag: **02.02.88**

(54) **Thermostat für eine temperaturabhängige Ventilsteuerung, insbesondere für Heizungsventile.**

(30) Priorität: **04.02.87 DE 8701719 U**

(43) Veröffentlichungstag der Anmeldung:
**07.09.88 Patentblatt 88/36**

(45) Bekanntmachung des Hinweises auf die
Patenterteilung:
**29.04.92 Patentblatt 92/18**

(84) Benannte Vertragsstaaten:
**DE ES FR IT**

(56) Entgegenhaltungen:
**DE-B- 1 798 294**
**DE-B- 2 625 561**
**DE-U- 1 853 013**
**FR-A- 2 520 470**

(73) Patentinhaber: **Theodor Heimeier Metallwerk KG**
**Postfach 11 24**
**W-4782 Erwitte(DE)**

(72) Erfinder: **Beine, Josef**
**Triftweg 10**
**W-4787 Geseke 5(DE)**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung bezieht sich auf ein Thermostat für eine temperaturabhängige Ventilsteuerung, insbesondere für Heizungsventile, bestehend aus einem hülsenförmigen Gehäuse, einem die erste Stirnwandung des Gehäuses bildenden Führungselement, einem in dem Führungselement verschiebbar eingelagerten Stößel, einer die zweite Stirnwandung des Gehäuses bildende Scheibe aus einem gießfähigen und wärmeleitfähigen elektrischen Isoliermaterial, einem in das Gehäuse eingefüllten wärmeausdehnbaren Material und einem auf das wärmeausdehnbare Material einwirkenden Widerstandsheizelement, dessen elektrische Leitungen in die zweite Stirnwandung eingesetzt sind.

Derartige Thermostate werden verwendet für eine Nachtabsenkung oder ganz allgemein um eine Absenkmöglichkeit der Raumtemperaturen während bestimmter Perioden zu erzielen. Als Heizelement wird häufig ein PCT-Widerstand verwendet, der sich selbst in der Heizleistung regelt. Bei den bekannten Thermostaten dieser Art, wie sie z. B. aus der DE-AS 17 98 294 bekannt sind, wird das Heizelement von außen mit einer Fläche an dem Gehäuse des Thermostaten anliegend angebracht. Hierbei wird nur ein geringer Teil der Wärmeleistung des Heizelementes durch Wärmeübertragung genutzt. Es muß hierbei nicht nur eine hohe Heizleistung aufgewendet werden, sondern die Regelung spricht sehr langsam an und ist darüber hinaus wegen der großen Außeneinflüsse ungenau.

Bei einer anderen in der FR-A-2 520 470 offenbarten Ausführungsform ist das Heizelement im Inneren des den Dehnstoff aufnehmenden Gehäuses angeordnet. Dabei sind die elektrischen Zuleitungen durch die aus Isolierstoff bestehende und das Gehäuse abschließende Scheibe hindurchgeführt. Diese Ausführungsform kann insbesondere bei einer Materialalterung der Scheibe zu Undichtigkeiten führen. Da das wärmeausdehnbare Material zur besseren Wärmeleitfähigkeit häufig mit Metallpulver, z. B. Kupferpulver, durchsetzt ist, muß auch das Widerstandsheizelement samt seiner elektrischen Anschlüsse isoliert werden. Eine derartige Isolierung ist ebenfalls in der FR-A 2 520 470 dargestellt. Sie besteht aus einer dünnen Kunststoffschicht. Diese dünne Kunststoffschicht wird aufgrund der vom Heizelement ausgehenden Wärme und durch den auf sie einwirkenden Druck schnell zerstört.

Aufgabe der Erfindung ist es, das Widerstandsheizelement so zu plazieren, daß es so wenig wie möglich Einflüssen von außen ausgesetzt ist, die Heizleistung schnell und mit einem möglichst hohen Wirkungsgrad auf das Wärmematerial übertragen wird und die vorstehend geschilderten Probleme hinsichtlich der Dichtigkeit der elektrischen Zuleitungen gegenüber der das Gehäuse abschließenden Scheibe und der Isolierung des Widerstandsheizelementes gegenüber dem wärmeausdehnbaren Material gelöst werden.

Diese Aufgabe wird erfindungsgemäß dadurch gelöst, daß das Widerstandsheizelement in die die zweite Stirnwandung des Gehäuses bildende Scheibe nahe an der Innenwandung liegend allseitig umschlossen eingegossen ist.

Bei einer vorteilhaften Ausführungsform der Neuerung ist die Scheibe aus Glas hergestellt. Glas ist temperaturunempfindlich, alterungsbeständig, ein ausreichend guter elektrischer Isolator und leitet trotzdem die Wärme noch in einem ausreichenden Maß.

Bei einer weiteren vorteilhaften Ausgestaltung weist die Scheibe einen zum Gehäuseinneren gerichteten Ansatz auf, in dem das Widerstandsheizelement eingebracht ist. Dadurch wird erreicht, daß das Widerstandsheizelement bis auf eine Seite von dem wärmeausdehnbaren Material umgeben ist. Diese Ausführungsform trägt besonders stark dazu bei, daß die in dem Widerstandsheizelement entwickelte Wärme schnell auf das wärmeausdehnbare Material übertragen wird.

Weiterhin ist es vorteilhaft, die elektrischen Zuleitungen zu dem Wirderstandsheizelement als nicht isolierte, metallische Stäbchen auszuführen. Damit dienen die aus der Glasscheibe nach außen herausragenden Enden gleichzeitig als Steckanschlüsse.

Um auch eine gute Verbindung zwischen der aus Glas hergestellten Scheibe und dem Gehäuse zu erzielen, ist nach einem weiteren Merkmal der Neuerung die Glasscheibe in einem metallischen Ring eingefaßt, der mechanisch, z. B. durch Bördeln, mit dem Gehäuserand verbunden ist.

Die Zeichnung veranschaulicht ein vorteilhaftes Ausführungsbeispiel der Neuerung, und zwar zeigen

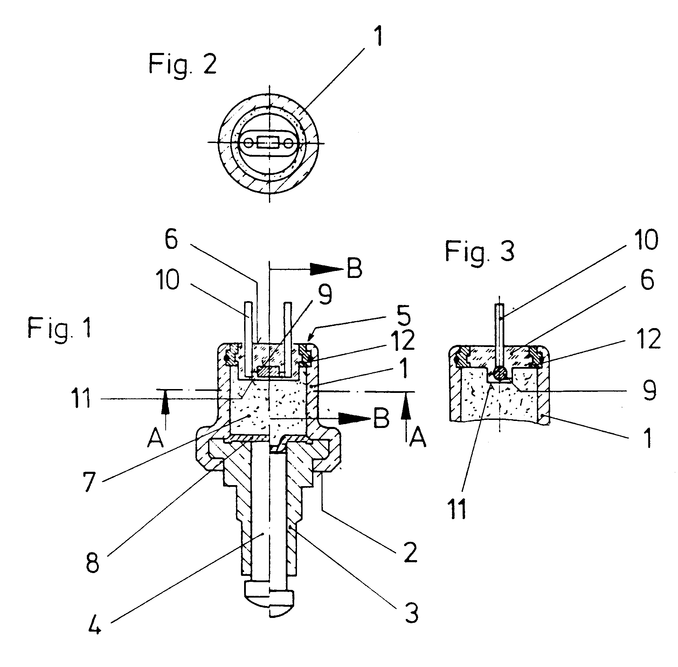

Figur 1 einen mittleren Längsschnitt durch den Thermostaten, wobei die beiden Hälften eine unterschiedliche Stellung des Stößels zeigen,

Figur 2 einen Querschnitt nach der Linie A-A und

Figur 3 einen Teilschnitt nach der Linie B-B.

Das aus Metall, vorzugsweise Messing, hergestellte hülsenförmige Gehäuse (1) ist an seiner ersten Stirnseite (2) durch ein hülsenartiges Führungselement (3), in welchem der Stößel (4) verschiebbar gelagert ist, abgedeckt. Die zweite Stirnseite (5) des Gehäuses ist durch eine Glasscheibe (6) verschlossen. Das Innere des Gehäuses ist mit einem wärmeausdehnbaren Material (7), vorzugsweise Wachs, ausgefüllt. Dieses Wachs ist mit Kupferpartikeln durchsetzt, die die Wärmeleitfähigkeit des wärmeausdehnbaren Materials erhöhen.

Zwischen dem Gehäuse (1) und dem hülsenförmigen Führungselement (3) ist eine Membran (8) eingespannt, die für eine Abdichtung gegenüber dem Stößel sorgt. Diese elastische Membran (8) wölbt sich bei Ausdehnung des wärmeausdehnbaren Materials (7) in die Führungsbohrung des hülsenförmigen Führungselementes hinein und verschiebt damit den Stößel (4).

In die aus Glas hergestellte Scheibe (6) ist das Widerstandsheizelement (9) eingegossen, dessen elektrische Anschlüsse mit zwei aus der Glasscheibe herausragenden, metallischen Stäbchen (10) verbunden sind. Auf der Innenseite weist die aus Glas hergestellte Scheibe (7) einen Ansatz (11) auf, der so gestaltet ist, daß er bis auf eine Seite von dem wärmeausdehnbaren Material umgeben ist. In diesen Ansatz (11) ist das Widerstandselement (9) dicht an der Innenwandung liegend eingegossen. Die Scheibe (6) ist in einen metallischen Ring (12) eingefaßt, der unter Zwischenschaltung einer Ringdichtung in das Gehäuse eingebördelt ist.

**Patentansprüche**

1. Thermostat für eine temperaturabhängige Ventilsteuerung, insbesondere für Heizungsventile, bestehend aus einem hülsenförmigen Gehäuse (1), einem die erste Stirnwandung (2) des Gehäuses (1) bildenden Führungselement (3), einem in dem Führungselement (3) verschiebbar gelagerten Stößel (4), einer die zweite Stirnwandung (5) des Gehäuses (1) Bildenden Scheibe (6) aus einem gießfähigen und wärmeleitfähigen elektrischen Isoliermaterial, einem in das Gehäuse (1) eingefüllten, wärmeausdehnbaren Material (7) und einem auf das wärmeausdehnbare Material (7) einwirkenden Widerstandsheizelement (9), dessen elektrische Leitungen (10) in die zweite Stirnwandung (5) eingesetzt sind, dadurch gekennzeichnet, daß das Widerstandsheizelement (9) in die die zweite Stirnwandung des Gehäuses (1) bildende Scheibe (6) nahe an der Innenwandung liegend allseitig umschlossen eingegossen ist.

2. Thermostat nach Anspruch 1, dadurch gekennzeichnet, daß die Scheibe (6) aus Glas hergestellt ist.

3. Thermostat nach Anspruch 1, dadurch gekennzeichnet, daß die Scheibe (6) aus Keramik hergestellt ist.

4. Thermostat nach einem der vorstehenden Ansprüche, dadurch gekennzeichnet, daß die Scheibe (6) einem zum Gehäuseinneren gerichteten Ansatz (11) aufweist, in dem das Widerstandsheizelement (9) eingegossen ist.

5. Thermostat nach einem der vorstehenden Ansprüche, dadurch gekennzeichnet, daß die elektrischen Zuleitungen zu dem Widerstandsheizelement (9) als nicht isolierte, metallische Stäbchen (10) ausgeführt sind.

6. Thermostat nach Anspruch 2 oder 3, dadurch gekennzeichnet, daß die Scheibe (6) in einem metallischen Ring (12) eingefaßt ist, der mechanisch, z. B. durch Bördeln, mit dem Gehäuserand verbunden ist.

**Claims**

1. A thermostat for a temperature-dependent valve-controlled distribution system, particularly for heating valves, comprising a sleeve-shaped housing (1), a guide element (3) forming the first end face (2) of the housing (1), a movable plunger (4) mounted in the guide element (3), a blank (6) forming the second end face (5) of the housing (1) and made of a castable, thermally conductive, electrically insulating material, a material which can expand thermally (7) and which fills the housing (1), and a resistance heating element (9) which acts on the material which can expand thermally (7), the electrical leads (10) of which resistance heating element are inserted into the second end wall (5), characterised in that the resistance heating element (9) is sealed into and surrounded all over by the blank (6) forming the second end face of the housing (1), near to the inside wall.

2. A thermostat according to Claim 1, characterised in that the blank (6) is manufactured from glass.

3. A thermostat according to Claim 1, characterised in that the blank (6) is manufactured from ceramic.

4. A thermostat according to any one of the preceding Claims, characterised in that the blank (6) has a projection (11) directed towards the inside of the housing, in which the resistance heating element (9) is sealed.

5. A thermostat according to any one of the preceding Claims, characterised in that the electrical leads to the resistance heating element (9) are constructed as small, non-insulating metal rods (10).

6. A thermostat according to Claims 2 or 3, characterised in that the blank (6) is enclosed within a metal ring (12), which is mechanically attached to the edge of the housing, e.g. by flanges.

**Revendications**

1. Thermostat pour une commande de robinet qui dépend de la température, en particulier pour robinet de chauffage, constitué d'un carter (1) en forme de douille, d'un élément de guidage (3) formant la première paroi frontale (2) du carter (1), d'un poussoir (4) placé, avec liberté de coulissement, dans l'élément de guidage (3), d'une rondelle (6) formant la seconde paroi frontale (5) du carter (1) et fabriquée en un matériau électriquement isolant, pouvant se couler et conducteur de la chaleur, d'un matériau (7) pouvant se dilater à la chaleur et remplissant le carter (1) et d'un élément chauffant par résistance (9) et qui agit sur le matériau (7) pouvant se dilater à la chaleur et dont les conducteur électriques (10) sont insérés dans la seconde paroi frontale (5), thermostat caractérisé par le fait que l'élément chauffant par résistance (9) est enrobé, entouré de tous côtés, dans la rondelle (6) formant la seconde paroi frontale du carter (1) et situé près de la paroi intérieure

2. Thermostat selon la revendication 1, caractérisé par le fait que la rondelle (6) est fabriquée en verre.

3. Thermostat selon la revendication 1, caractérisée par le fait que la rondelle (6) est fabriquée en céramique.

4. Thermostat selon l'une des revendications précédentes, caractérisée par le fait que la rondelle (6) présente une embout (11) qui est dirigé vers l'intérieur du carter et dans lequel est enrobé l'élément (9) de chauffage par résistance.

5. Thermostat selon l'une des revendications précédentes, caractérisé par le fait que les conducteurs électriques reliés à l'élément chauffant par résistance (9) sont réalisés sous forme de broches métalliques (10) non isolées.

6. Thermosat selon la revendication 2 ou 3, caractérisé par le fait que la rondelle (6) est monée dans une bague métallique (12) qui est mécaniquement reliée avec le bord du carter, par exemple par sertissage.

Fig. 2

1

Fig. 3

10

6

12

9

1

11

6

10

B

9

Fig. 1

5

12

1

11

A

B

A

7

8

2

4

3